# EUROPÄISCHE PATENTSCHRIFT

(11) **EP 4 194 735 B1**
(45) Veröffentlichungstag und Bekanntmachung des Hinweises auf die Patenterteilung: **05.02.2025**
(21) Anmeldenummer: 21212664.3
(22) Anmeldetag: 07.12.2021
(51) Int. Cl.: F16L 39/00, F16L 47/03, F16L 47/28, B29C 65/34, B29C 65/00

(54) **DOPPELROHRSYSTEM**
DOUBLE PIPE SYSTEM
SYSTÈME DE TUYAU DOUBLE

(43) Veröffentlichungstag der Anmeldung: 14.06.2023
(73) Patentinhaber: Georg Fischer Rohrleitungssysteme AG, 8201 Schaffhausen (CH)
(72) Erfinder: Breyer, Markus, 78315 Radolfzell (DE); Roesch, Juergen, 79853 Lenzkirch (DE)
(74) Vertreter: Fenner, Seraina

(56) Entgegenhaltungen:
- EP-B1- 2 411 720
- US-A- 4 886 305
- US-A- 5 087 308
- US-A- 5 901 753

## Beschreibung

Die Erfindung betrifft ein Doppelrohrsystem und dessen Verfahren zur Installation mit einer Medium führenden primären Rohrleitung und einer zum Schutz um die primäre Rohrleitung angeordneten sekundären Rohrleitung, beinhaltend Rohre und Fittings der primären Rohrleitung, wobei die Rohre und Fittings der primären Rohrleitung miteinander verbunden sind, Rohre und Fittings der umgebenden sekundären Rohrleitung, wobei die Rohre als einteilige Kunststoffrohre und die Fittings als Halbschalen ausgebildet sind.

Doppelrohrsystem sind entweder gesetzlich vorgeschrieben oder werden von den Endbenutzern installiert, um den unerwarteten Austritt gefährlicher Chemikalien in die Umwelt zu verhindern oder um Personenschäden vorzubeugen. Darüber hinaus werden Doppelrohrsysteme für den Schutz insbesondere kostspieliger Anlagen (Maschinen, IT-Infrastrukturen) eingesetzt. Die sekundäre Rohrleitung besteht aus einem Schutzrohr, dass das innere oder primäre fluidführende Rohr umschliesst. Sekundäre Rückhaltesysteme können entweder erdverlegt oder oberirdisch, unter Druck oder als Drainagesystem ausgeführt sein und verfügen in der Regel über eine Art Detektionssystem zur Erkennung von Leckagen. Die heutigen Systeme werden mittels einer Simultan- oder Kaskadenschweissung miteinander verbunden. Die Verbindungstechnik variiert stark von Kontinent zu Kontinent. Insbesondere in Europa werden die Verbindungen jedoch vermehrt durch eine Heißverschweißung (bei Polyolefinen) realisiert.

Aus dem Stand der Technik ist bekannt, dass bereits vorfabrizierte Fittings mit einem Innen- und Aussenfitting hergestellt werden, und diese dann jeweils mit einem Innen- und Aussenrohr verbunden werden. Aufgrund der vielen verschiedenen Durchmesser der Innen- und Aussenrohre und der unterschiedlichen Fittings wie T-Stück, Winkelstücke, usw. die vorfabriziert werden müssen, ist ein hoher Lagerbestand erforderlich, was heutzutage nicht mehr erwünscht ist. In ähnlicher Weise werden sekundäre Containment-Rohre hergestellt, indem ein kleineres Innen- /Hauptrohr in ein größeres Außen-/Containment-Rohr eingefügt und mit einem Zentrierstück versehen werden. Das Verbinden der Rohre mit den Formstücken ist dann die schwierigste Aufgabe. Bestehende Systeme erfordern eine beträchtliche Anzahl gleichzeitiger Verbindungen für eine Installation. Typische Klebeverbindungen erfolgen indem zuerst das Auftragen einer Grundierung auf beide zusammenpassenden Oberflächen aufgetragen wird; dann erfolgt das Auftragen des Zementits auf beide Oberflächen und dann das schnelle Zusammenfügen der zusammenpassenden Teile mit einer Vierteldrehung und dann das Festhalten der Teile, dreissig Sekunden bis eine Minute, bis der Zementit abbindet. Verständlicherweise ist dieses Verfahren noch schwieriger zu bewerkstelligen, wenn versucht wird, eine innere und eine äussere Verbindung gleichzeitig herzustellen. Es gibt doppelt so viele Oberflächen, die vorbereitet werden müssen, und das Innenrohr muss am Schutzrohr befestigt werden, um ein vollständiges Einsetzen der Muffe zu gewährleisten. Ausserdem wird die innere Verbindung bei Ausführung einer Simultanverbindung "blind" ausgeführt. Weitere Nachteile der bestehenden Systeme sind zudem die fehlende Möglichkeit, die innere Verbindung während der Druckprüfung zu inspizieren, und die Schwierigkeit, eine defekte Verbindung zu lokalisieren und zu reparieren, falls ein Leck auftritt.

Die US 5 087 308 offenbart ein Verfahren zum Verbinden von Doppelrohrsystem, wobei dieses sich ausschliesslich für gerad verlaufenden Rohrleitungen ohne Abzweigungen geeignet ist.

Es ist Aufgabe der Erfindung ein Doppelrohrsystem und ein damit verbundenes Verfahren zu dessen Montage vorzuschlagen, das eine hohe Flexibilität in der Zusammenstellung eines Doppelrohrsystems ermöglicht, ohne eine hohe Anzahl an unterschiedlichen Teilen zu führen und eine gute Zugänglichkeit des Innenrohrs sowie eine zuverlässige Verbindungstechnik zu gewährleisten.

Diese Aufgabe wird erfindungsgemäss durch das Doppelrohrsystem des Anspruchs 1 gelöst.

Das erfindungsgemässe Doppelrohrsystem mit einer Medium führenden primären Rohrleitung und einer zum Schutz um die primäre Rohrleitung angeordneten sekundären Rohrleitung, beinhaltet Rohre und Fittings der primären Rohrleitung, wobei die Rohre und Fittings der primären Rohrleitung miteinander verbunden sind, vorzugsweise durch Verschweissen oder Verkleben. Die Rohre und Fittings der primären Rohrleitung sind vorzugsweise aus Kunststoff hergestellt, jedoch sind auch primäre Rohrleitungen aus Metall denkbar, die von einer sekundären Rohrleitung aus Kunststoff umgeben sind. Zudem weist das erfindungsgemässe Doppelrohrsystem Rohre und Fittings der umgebenden sekundären Rohrleitung auf, wobei die Rohre als einteilige Kunststoffrohre und die Fittings als Halbschalen ausgebildet sind. Die Halbschalen des Fittings und die anschliessenden Rohre der sekundären Rohrleitung sind mittels Elektroschweissmuffen miteinander verbunden. Ebenso sind an das Fitting anschliessende Fittings auch mit Elektroschweissmuffen miteinander verbunden.

Als vorteilhaft hat sich gezeigt, wenn die Elektroschweissmuffen als einteilige hohlzylinderförmige Muffen ausgebildet sind. Dadurch können Standard Elektroschweissmuffen eingesetzt werden, die bei der Montage provisorisch auf das Rohr der sekundären Rohrleitung aufgeschoben werden und vor dem Verschweissen vorzugsweise zur Hälfte auf das Fitting aufgeschoben und dann mit dem Rohr und dem Fitting verschweisst werden. Die Elektroschweissmuffen weisen vorzugsweise zwei Heizelemente auf, vorzugsweise Heizdrahtwicklungen die auf beiden Seiten der Muffe angeordnet sind und jeweils mit dem Fitting und dem Rohr der sekundären Rohrleitung verschweisst werden.

Vorzugsweise sind die Halbschalen durch eine mittig durch das Fitting verlaufende Trennebene entlang der Achse gebildet. Das heisst, die beiden Halbschalen sind vorzugsweise symmetrisch ausgebildet.

Es ist vorteilhaft, wenn die Fittings der sekundären Rohrleitung keine Heizelemente aufweisen, das heisst, die Halbschalen haben keine Heizelemente.

Als weitere vorteilhafte Ausführungsform hat sich gezeigt, wenn mindestens eine Halbschale eines Fittings der sekundären Rohrleitung eine entlang der Trennebene verlaufenden Dichtung aufweist, wobei die Dichtung im Bereich der Elektroschweissmuffe bzw. beim Anschlussstutzen eine stoffschlüssige Verbindung mit den Halbschalen des Fittings eingeht nachdem die Elektroschweissmuffe fest an der sekundären Rohrleitung installiert und verschweisst ist. Die Dichtung verläuft entlang der Kante bzw. der Wandung der Halbschale in der Trennebene. Die Trennebene verläuft entlang der Achse des Fittings und unterteilt diesen in zwei symmetrische Halbschalen. Die Dichtung verläuft vorzugsweise in der Mitte der Kante. Als vorteilhaft hat sich gezeigt, wenn die Dichtung im Bereich der Anschlussstutzen der Halbschalen am äusseren Rand der Kante angeordnet ist, so dass die Dichtung direkt mit der Elektroschweissmuffe kontakt hat und sich mit dieser beim Erwärmen stoffschlüssig verbindet.

Es ist vorteilhaft, wenn die Rohre und Fittings der primären Rohrleitung durch Elektroschweissen miteinander verbunden sind. Dadurch kann dasselbe Schweissverfahren bei der primären wie auch der sekundären Rohrleitung angewandt werden. Wobei auch andere Verbindungsmethoden, wie Kleben oder Stumpfschweissen für die primäre Rohrleitung denkbar sind.

Vorzugsweise sind die Fittings des primären Rohrleitungssystems als Elektroschweissfittings ausgebildet.

Die Fittings sind vorzugsweise als T-Stück, Abzweigstück und/oder als Bogen ausgebildet. Das heisst, dass das T-Stück, Abzweigstück und/oder der Bogen der sekundären Rohrleitung als Halbschalen ausgebildet sind und bei der Montage mithilfe der Elektroschweissmuffe zusammengeschweisst werden.

Es ist vorteilhaft, wenn die Halbschalen des Fittings jeweils anschlussseitig einen Anschlussstutzen aufweisen, wobei der Aussendurchmesser der Anschlussstutzen vorzugsweise dem Aussendurchmesser des Rohres entspricht. Die Anschlussstutzen des Fittings weisen einen kleineren Aussendurchmesser auf als der mittlere Bereich des Fittings. Dadurch weist das Fitting bzw. die Halbschalen einen Absatz auf an dem die Elektroschweissmuffe bei der Montage ansteht und dadurch die genaue Position der Elektroschweissmuffe vorgegeben ist bzw. der Installateur kann erkennen wie weit er die Elektroschweissmuffe über das Fitting schieben muss damit sie korrekt installiert ist. Bei der Variante, dass zwei Fittings aneinander verschweisst werden, ist es Vorteilhaft wenn die Fittings auf ihren Anschlussstutzen Markierungen aufweisen, wodurch dem Installateur angezeigt wird ob die Elektroschweissmuffe an der richtigen Stelle sitzt.

Als vorteilhaft hat sich gezeigt, wenn in den Fittings Distanzelemente angeordnet sind, wobei die Distanzelemente die konzentrische Anordnung der primären und sekundären Rohrleitung gewährleisten. Durch die Distanzelemente sind die primäre und sekundäre Rohrleitungen voneinander konzentrisch beabstandet angeordnet. Zudem dient das Distanzelement der axialen Positionierung des Fittings gegenüber der primären Rohrleitung.

Vorzugsweise sind auch Distanzelemente in den Rohren vorgesehen, wobei diese nicht identisch mit denen vom Fitting sein müssen.

Als bevorzugte Ausführungsform weist das Fitting der sekundären Rohrleitung mindestens einen Clip auf, wobei der Clip dazu dient, um die Halbschalen provisorisch an der primären Rohrleitung zu fixieren. Dadurch ist es einfacher die Elektroschweissmuffe auf das Fitting der sekundären Rohrleitung aufzuschieben. Der Clips kann als ein separates Bauteil nachträglich in der Halbschale angebracht werden oder gleich auch beim Spritzgiessen miteingegossen werden.

Eine weitere bevorzugte Möglichkeit besteht darin, dass das Distanzelement bereits die Eigenschaft aufweist, dass es eine gewisse Selbsthemmung an der primären Rohrleitung mit sich bringt, wodurch ebenfalls der Effekt erzielt wird, dass das Fitting provisorisch an der primären Rohrleitung fixiert ist, damit der Installateur die Elektroschweissmuffe einfacher aufschieben kann, weil er diese nicht noch festzuhalten braucht.

Das erfindungsgemässe Verfahren zur Installation des Doppelrohrleitungssystems beinhaltet folgende Schritte:
Verschweissen eines Teilabschnitts der primären Rohrleitung mit mindestens einem Fitting und Rohr, wobei vorzugsweise eine Elektroschweissung für Verschweissung der Fittings und Rohre der primären Rohrleitung eingesetzt wird. Die Verschweissung wird in Teilabschnitten durchgeführt, um einerseits die Verschweissung zu prüfen und andererseits die Rohre der sekundären Rohrleitung abschnittsweise anzubringen bzw. aufzufädeln. Die Verschweissung der Teilabschnitte der primären Rohrleitung wird derart unterteilt, dass auf mindestens einer Seite der primären Rohrleitung ein Rohr der sekundären Rohrleitung aufschiebbar ist.

Zudem werden die Elektroschweissmuffen provisorisch am Aussendurchmesser eines auf die primäre Rohrleitung aufzuschiebenden Rohres der sekundären Rohrleitung angeordnet. Anschliessend wird das Rohr einer sekundären Rohrleitung auf dem die Elektroschweissmuffe oder Elektroschweissmuffen provisorisch angeordnet sind, auf das bereits mit einem Fitting zu einem Teilabschnitt verschweissten Rohr der primären Rohrleitung aufgeschoben.

Nach der Installation der primären Rohrleitungen bzw. eines Teilabschnitts, kann diese unter Druck abgepresst werden und mögliche Leckagen erkannt werden.

Anschliessend erfolgt das Anbringen eines Fittings der sekundären Rohrleitung vorzugsweise um ein Fitting der primären Rohrleitung herum, durch das Zusammenführen bzw. Zusammenfügen von zwei Halbschalen. Selbstverständlich ist es auch möglich ein Fitting der sekundären Rohrleitung, das aus zwei Halbschalen besteht um ein Rohr der primären Rohrleitung anzubringen. Dies wird meist bei Lagerstellen bei denen die Rohrleitung fixiert ist umgesetzt.

Um die sekundäre Rohrleitung zu verschweissen, wird die provisorisch am Aussendurchmesser des Rohres der sekundären Rohrleitung angeordnete Elektroschweissmuffe teilweise über das Fitting der sekundären Rohrleitung, bestehend aus den beiden Halbschalen, geschoben und verschweisst. Die Elektroschweissmuffe ist zum Verschweissen ungefähr zur Hälfte auf dem Rohraussendurchmesser und zur anderen Hälfte auf dem Fitting angeordnet.

Vorzugsweise wird die Elektroschweissmuffe über den Anschlussstutzen des Fittings der sekundären Rohrleitung bzw. der beiden Halbschalen geschoben bis zu einem Anschlag. Wobei der Anschlag vorzugsweise durch den grösseren Querschnitt im mittleren Bereich des Fittings besteht.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: ein Ausschnitt eines erfindungsgemässen Doppelrohrsystems dargestellt mit nur einer Halbschale,
- Fig. 2: eine Halbschale des erfindungsgemässen Doppelrohrsystems,
- Fig. 2a: eine Halbschale des erfindungsgemässen Doppelrohrsystems bei der im Bereich der Anschlussstutzen die Dichtung aussen angeordnet ist,
- Fig. 3: einen Abschnitt eines erfindungsgemässen Doppelrohrsystems,
- Fig. 4 - 6: das erfindungsgemässe Verfahren zur Installation des Doppelrohrleitungssystems schrittweise,
- Fig. 7: ein Ausschnitt eines erfindungsgemässen Doppelrohrsystems dargestellt mit nur einer Halbschale mit ersichtlichem Clips und
- Fig. 8: zwei miteinander mit einer Elektroschweissmuffe verbundene Fittings.

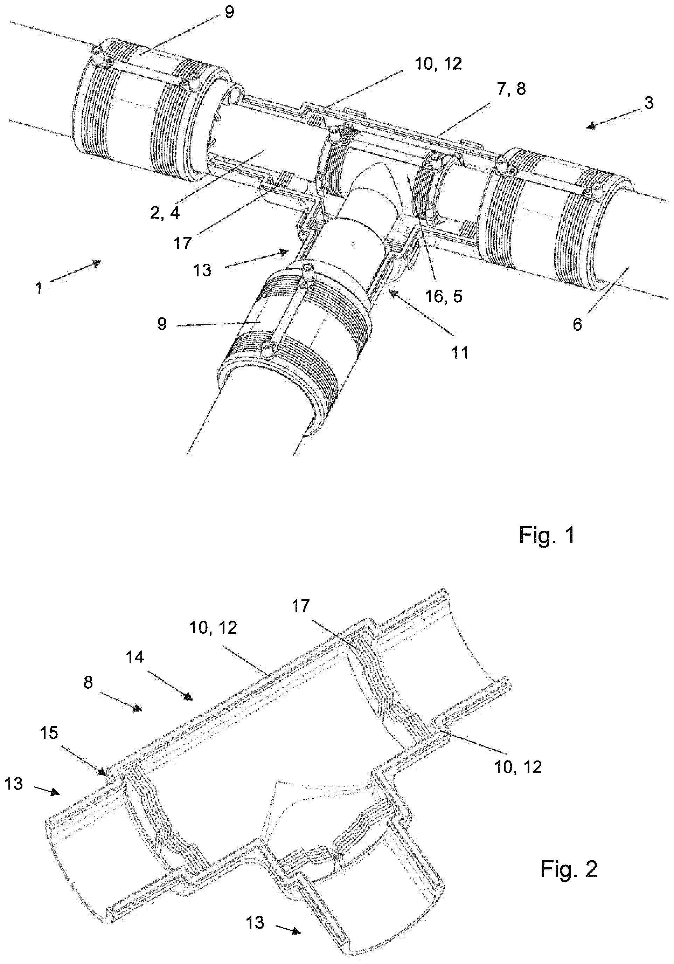

Die in Fig. 1 dargestellte Zeichnung zeigt eine dreidimensionale Ansicht eines teilweise verschweissten Fittings 7 der sekundären Rohrleitung 3, wobei die obere Halbschale ausgeblendet ist. Die auf der rechten Seite dargestellte Elektroschweissmuffe 9 ist bereits am Fitting 7 richtig platziert und verschweisst. Wohingegen die linke und untere Elektroschweissmuffe 9 noch auf den Anschlussstutzen 13 des Fittings 7 zu schieben sind. Das erfindungsgemässe Doppelrohrsystem 1 weist eine primäre Rohrleitung 2 auf, durch das Medium zirkuliert. Die primäre Rohrleitung 2 weist Rohre 4 und Fittings 5 auf, die miteinander verschweisst sind, vorzugsweise durch Elektroschweissmuffen 16, wobei auch andere Verbindungsarten denkbar sind, wie beispielsweise Kleben oder Stumpfschweissen. Die primäre Rohrleitung 2 ist vorzugsweise aus Kunststoff hergestellt, wobei auch eine metallische Rohrleitung als primäre Rohrleitung durchaus vorstellbar ist.

Des Weiteren beinhaltet das erfindungsgemässe Doppelrohrsystem 1 eine sekundäre Rohrleitung 3, die um das primäre Rohrleitungssystem 2 angeordnet ist.

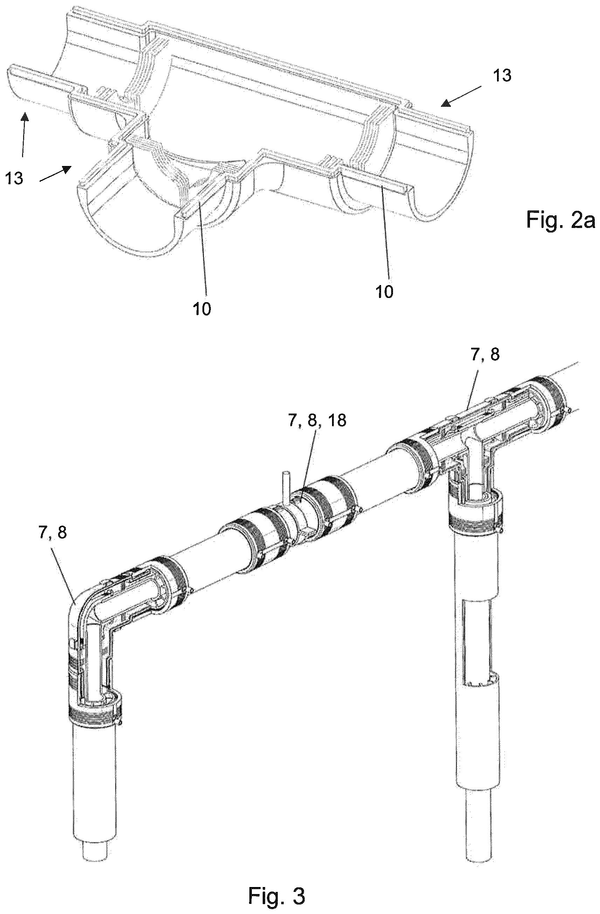

Die sekundäre Rohrleitung 3 dient dem Schutz der Umwelt oder von Personenschäden vor austretenden Medien bei leckenden primären Rohrleitungssystemen 2. Die sekundäre Rohrleitung 3 beinhaltet Rohre 6 und Fittings 7, wobei die Fittings 7 als Halbschalen 8 ausgebildet sind. Die Rohre 6 sind als einteilige Kunststoffrohre ausgebildet und in der Regel durch extrudieren hergestellt. Die Rohre 6 werden über das Rohr 4 der primären Rohrleitung 2 geschoben, wobei nur immer ein Teilabschnitt der primären Rohrleitung 2 installiert ist, um dann die sekundäre Rohrleitung 3 zu installieren. Die beiden Halbschalen 8 des Fittings 7 der sekundären Rohrleitung 3 werden um die entsprechende Stelle der primären Rohrleitung 2 angebracht. Meist ist die Stelle ebenso ein Fitting 5 der primären Rohrleitung 2 wie in der Fig. 1 gezeigt. Die Halbschalen 8 der Fittings 7 können auch an anderen Stellen angebracht sein, beispielsweise in dem sie als Lagerstelle 18 dienen, an der das Doppelrohrsystem 1 befestigt ist, was aus Fig. 3 erkennbar ist. Für eine konzentrische Anordnung der beiden Rohrleitungen 2, 3 weisen die Halbschalen 8, Distanzelemente 17 auf welche die Fittings 5, 7 zueinander konzentrisch beabstanden. Zudem dienen sie der axialen Platzierung der Halbschalen 8. In Fig. 1 ist der Verlauf der Dichtung 10 gut ersichtlich, welche sich entlang der Kante bzw. Wandung 12 der Halbschale 8 erstreckt. Beim Verschweissen mittels den an den Fittings 7 der sekundären Rohrleitung 3 angeordneten Elektroschweissmuffen 9 verbindet sich die Dichtung 10 stoffschlüssig mit den Halbschalen 8 im Bereich der Elektroschweissmuffen 9. Fig. 2 zeigt eine Halbschale 8 eines Fittings 7 einer sekundären Rohrleitung 3. Gut ersichtlich sind die Anschlussstutzen 13 auf, die die Elektroschweissmuffe 9 zum Verschweissen der Halbschalen 8 bzw. des Fittings 7 aufgeschoben wird. Durch den Absatz 15 der sich aufgrund des geringeren Durchmessers des Anschlussstutzens 13 gegenüber dem Mittelbereich 14 der Halbschale 8 bzw. des Fittings 7 bildet, ergibt sich ein Anschlag für die Elektroschweissmuffe 9, wodurch die Muffe entsprechen korrekt platziert ist. Zudem ist in Fig. 2 wiederum der Verlauf der Dichtung 10 entlang der Kante 12 der Halbschale 8 gut erkennbar. Die Dichtung 10 verläuft in der Trennebene 11 von zweier Halbschalen 8, welche einen Fitting 7 bilden. In Fig. 2 ist ein Ausführungsbeispiel gezeigt, bei dem die Dichtung 10 über die ganze Kante der Halbschale 8 mittig verläuft. In der Fig. 2a ist ein Ausführungsbeispiel aufgezeigt, bei dem die Dichtung 10 im Bereich der Anschlussstutzen 13 aussen, an deren Aussendurchmesser angeordnet ist, um beim Verschweissen mit der Elektroschweissmuffe 9 sich direkt mit dieser stoffschlüssig zu verbinden. Fig. 3 zeigt unterschiedliche Fittings 7 die als Halbschalen 8 ausgebildet sind. Als Beispiel wird ein T-Stück wie ein 90° Winkel gezeigt, wobei auch andere Fittings wie Abzweigstücke, Bögen oder Halbschalen für Befestigungspunkte, welche als Lagerstellen 18 ausgebildet sind, vorstellbar sind.

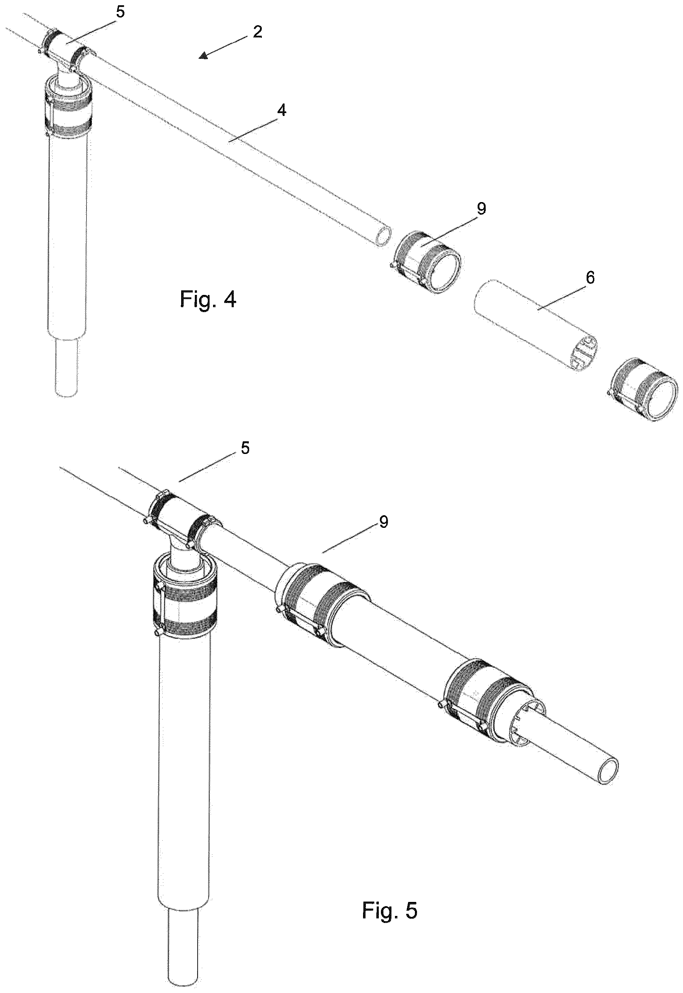

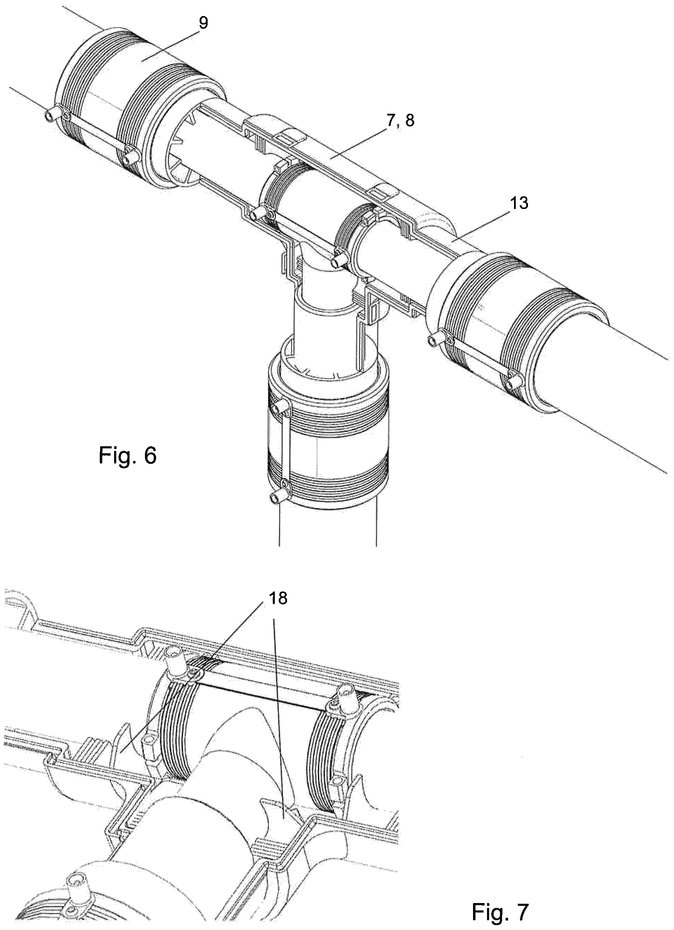

Fig. 4 - 6 zeigen das erfindungsgemässe Verfahren zur Installation des Doppelrohrsystems 1 schrittweise. Fig. 4 zeigt den Teilbereich der primären Rohrleitung 2 der bereits installiert ist, vorzugsweise durch Verschweissen der Rohre 4 und Fittings 5, so dass das Rohr 6 der sekundären Rohrleitung 3 darüber geschoben werden kann. Jedoch ist der Teilbereich der primären Rohrleitung 2 nur so weit verschweisst, dass zumindest eine Seite der primären Rohrleitung 2 zugänglich für die aufzuschiebende sekundäre Rohrleitung 3 bleibt. Zudem zeigt Fig. 4 die Vorbereitung des Rohres 6 der sekundären Rohrleitung 3 indem eine Elektroschweissmuffe 9 provisorisch am Aussendurchmesser des Rohres 6 angeordnet wird und dann das Rohr 6 sowie auch die beidseits des Rohres angeordneten Elektroschweissmuffen 9 auf den Teilbereich der primären Rohrleitung 2 aufgeschoben werden. Fig. 5 zeigt wie das Rohr 6 mit den darauf angeordneten Elektroschweissmuffen 9 auf die primäre Rohrleitung 2 aufgeschoben wird. Fig. 6 zeigt die an das Fitting 7 herangeschobenen Rohr 6 der sekundären Rohrleitung 2. Anschliessend werden die Elektroschweissmuffen 9 auf den Anschlussstutzen 13 des Fittings 7 aufgeschoben bis hin zum Absatz 15. Daraufhin werden die Elektroschweissmuffen 9 verschweisst. Was zu einem Doppelrohrsystem 1 führt wie in Fig. 3 dargestellt. Fig. 7 zeigt einen offenen Fitting 7 der sekundären Rohrleitung 3 bzw. eine Halbschale 8 mit der darin verlaufenden primären Rohrleitung 2. Gut ersichtlich sind die darin angebrachten Clipse 18, die die Halbschalen 8 zur Montage leicht an der primären Rohrleitung 3 befestigen. Das bringt den Vorteil einer leichten provisorischen Anordnung der Halbschalen 8 an der primären Rohrleitung 2, was dem Installateur das Befestigen der zweiten Halbschale und das Aufschieben der Elektroschweissmuffe 9 erleichtert.

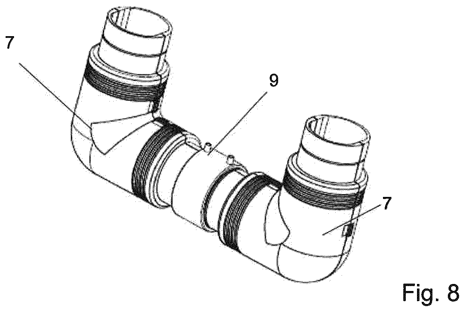

In Fig. 8 ist gezeigt, wenn zwei Fittings 7 der sekundären Rohrleitung 3 direkt miteinander verschweisst sind, ohne ein Rohrstück dazwischen. Die Elektroschweissmuffe 9 ist dann in der Mitte der beiden Anschlussstutzen 13 der Fittings angeordnet, wobei die axiale Positionierung der Elektroschweissmuffe 9 vorzugsweise durch Indikatoren auf den Fittings vorgegeben wird.

## Patentansprüche

1. Doppelrohrsystem (1) mit einer Medium führenden primären Rohrleitung (2) und einer zum Schutz um die primäre Rohrleitung (2) angeordneten sekundären Rohrleitung (3), beinhaltend, Rohre (4) und Fittings (5) der primären Rohrleitung (2), wobei die Rohre (4) und Fittings (5) der primären Rohrleitung (2) miteinander verbunden sind, und Rohre (6) und Fittings (7) der umgebenden sekundären Rohrleitung (3), wobei die Rohre (6) der sekundären Rohrleitung (3) als einteilige Kunststoffrohre und die Fittings (7) der sekundären Rohrleitung (3) eine Achse aufweisen und als Halbschalen (8) ausgebildet sind, wobei die Halbschalen (8) der Fittings (7) und die anschliessenden Rohre (6) der sekundär Rohrleitung (3) mittels Elektroschweissmuffen (9) miteinander verbunden sind, oder die Halbschalen (8) der Fittings (7) der sekundären Rohrleitung (3) und daran anschliessende Fittings (7) aus Halbschalen (8) mittels Elektroschweissmuffen (9) miteinander verbunden sind, **dadurch gekennzeichnet, dass** mindestens eine Halbschale (8) eines Fittings (7) eine entlang einer parallel zur Achse verlaufenden Trennebene (11) verlaufende Dichtung (10) aufweist, wobei die Dichtung (10) im Bereich der Elektroschweissmuffe (9) eine stoffschlüssige Verbindung mit den Halbschalen (8) des Fittings (7) oder den Halbschalen (7) und der Elektroschweissmuffe (9) eingeht.

2. Doppelrohrsystem (1) nach Anspruch 1, **dadurch gekennzeichnet, dass** die Elektroschweissmuffen (9) als einteilige, hohlzylinderförmige Muffen ausgebildet sind.

3. Doppelrohrsystem (1) nach Anspruch 1, **dadurch gekennzeichnet, dass** die Halbschalen (7) durch eine mittig durch das Fitting (7) verlaufende Trennebene entlang der Achse gebildet sind.

4. Doppelrohrsystem (1) nach einem der Ansprüche 1 bis 3, **dadurch gekennzeichnet, dass** die Rohre (4) und Fittings (5) der primären Rohrleitung (2) durch Elektroschweissen miteinander verbunden sind.

5. Doppelrohrsystem (1) nach einem der Ansprüche 1 bis 3, **dadurch gekennzeichnet, dass** die Fittings (5) der primären Rohrleitung als Elektroschweissmuffe (16) ausgebildet sind.

6. Doppelrohrsystem (1) nach einem der Ansprüche 1 bis 5, **dadurch gekennzeichnet, dass** die Fittings (5, 7) als T-Stück, Abzweigstück und/oder als Bogen ausgebildet sind.

7. Doppelrohrsystem (1) nach einem der Ansprüche 1 bis 6, **dadurch gekennzeichnet, dass** die Halbschalen (8) des Fittings jeweils anschlussseitig einen Anschlussstutzen (13) aufweisen, wobei der Aussendurchmesser der Anschlussstutzen (13) vorzugsweise dem Aussendurchmesser des Rohres (6) entspricht.

8. Doppelrohrsystem (1) nach einem der Ansprüche 1 bis 7, **dadurch gekennzeichnet, dass** in den Fittings (7) Distanzelemente (17) angeordnet sind, wobei die Distanzelemente (17) die konzentrische Anordnung der primären und sekundären Rohrleitung zueinander gewährleisten.

9. Doppelrohrsystem (1) nach einem der Ansprüche 1 bis 8, **dadurch gekennzeichnet, dass** in den Fittings (7) mindestens ein Clip (18) angeordnet ist um die Halbschalen (8) provisorisch an der primären Rohrleitung (2) zu fixieren.

10. Verfahren zur Installation des Doppelrohrsystems nach einem der Ansprüche 1 bis 9, beinhaltend folgende Schritte:
Verschweissen eines Teilabschnitts der primären Rohrleitung (2) mit mindestens einem Fitting (5) und mindestens einem Rohr (4),
provisorisches Anordnen einer Elektroschweissmuffe (9) am Aussendurchmesser eines auf die primäre Rohrleitung (2) aufzuschiebenden Rohres (6) der sekundären Rohrleitung (3),
Aufschieben des Rohres (6) mit der provisorisch daran angeordneten Elektroschweissmuffe (9) einer sekundären Rohrleitung (3) auf den Rohrleitungsabschnitt des mit einem Fitting (5) verschweissten Teilabschnitts der primären Rohrleitung (2),
Anbringen eines Fittings (7) der sekundären Rohrleitung (3), vorzugsweise um ein Fitting (5) der primären Rohrleitung (2) durch das Zusammenführen von zwei Halbschalen (8),
**dadurch gekennzeichnet, dass** das provisorisch am Aussendurchmesser des Rohres (6) der sekundären Rohrleitung (3) angeordnete Elektroschweissfitting (9) über den Anschlussstutzen des Fittings (7), bestehend aus den beiden Halbschalen (8), geschoben und verschweisst wird.

## Claims

1. Double pipe system (1) with a primary pipeline (2) conducting a medium and a secondary pipeline (3) which is arranged around the primary pipeline (2) for protection, containing pipes (4) and fittings (5) of the primary pipeline (2), wherein the pipes (4) and fittings (5) of the primary pipeline (2) are connected together, and pipes (6) and fittings (7) of the surrounding secondary pipeline (3), wherein the pipes (6) of the secondary pipeline (3) are configured as one-piece plastics pipes and the fittings (7) of the secondary pipeline (3) have an axis and are configured as half-shells (8), wherein the half-shells (8) of the fittings (7) and the adjoining pipes (6) of the secondary pipeline (3) are connected together by means of electric welding sleeves (9), or the half-shells (8) of the fittings (7) of the secondary pipeline (3) and the adjoining fittings (7) consisting of half-shells (8) are connected together by means of electric welding sleeves (9), **characterized in that** at least one half-shell (8) of a fitting (7) has a seal (10) running along a parting plane (11) running parallel to the axis, wherein the seal (10) in the region of the electric welding sleeve (9) creates a material connection with the half-shells (8) of the fitting (7) or the half-shells (7) and the electric welding sleeve (9) .

2. Double pipe system (1) according to Claim 1, **characterized in that** the electric welding sleeves (9) are configured as one-piece hollow cylindrical sleeves.

3. Double pipe system (1) according to Claim 1, **characterized in that** the half-shells (7) are formed by a parting plane running centrally through the fitting (7) along the axis.

4. Double pipe system (1) according to one of Claims 1 to 3, **characterized in that** the pipes (4) and fittings (5) of the primary pipeline (2) are connected together by electric welding.

5. Double pipe system (1) according to one of Claims 1 to 3, **characterized in that** the fittings (5) of the primary pipeline are configured as an electric welding sleeve (16).

6. Double pipe system (1) according to one of Claims 1 to 5, **characterized in that** the fittings (5, 7) are configured as a T-piece, branching piece and/or as a curved piece.

7. Double pipe system (1) according to one of Claims 1 to 6, **characterized in that** the half-shells (8) of the fitting in each case have a connecting piece (13) on the connection side, wherein the outer diameter of the connecting pieces (13) preferably corresponds to the outer diameter of the pipe (6).

8. Double pipe system (1) according to one of Claims 1 to 7, **characterized in that** spacer elements (17) are arranged in the fittings (7), wherein the spacer elements (17) ensure the concentric arrangement of the primary pipeline and secondary pipeline to one another.

9. Double pipe system (1) according to one of Claims 1 to 8, **characterized in that** at least one clip (18) is arranged in the fittings (7) in order to fix the half-shells (8) temporarily to the primary pipeline (2).

10. Method for installing the double pipe system according to one of Claims 1 to 9, containing the following steps:
welding a sub-portion of the primary pipeline (2) to at least one fitting (5) and at least one pipe (4),
temporarily arranging an electric welding sleeve (9) on the outer diameter of a pipe (6) of the secondary pipeline (3) which is to be pushed onto the primary pipeline (2),
pushing the pipe (6), with the electric welding sleeve (9) of a secondary pipeline (3) temporarily arranged thereon, onto the pipeline portion of the sub-portion of the primary pipeline (2) welded to a fitting (5),
attaching a fitting (7) of the secondary pipeline (3), preferably around a fitting (5) of the primary pipeline (2), by combining two half-shells (8),
**characterized in that** the electric welding fitting (9) which is temporarily arranged on the outer diameter of the pipe (6) of the secondary pipeline (3) is pushed over the connecting piece of the fitting (7), consisting of the two half-shells (8), and welded.

## Revendications

1. Système de tuyau double (1) comportant une conduite tubulaire primaire (2) acheminant un fluide et une conduite tubulaire secondaire (3) disposée autour de la conduite tubulaire primaire (2) pour la protection, contenant des tuyaux (4) et des raccords (5) de la conduite tubulaire primaire (2), les tuyaux (4) et raccords (5) de la conduite tubulaire primaire (2) étant reliés les uns aux autres, et des tuyaux (6) et raccords (7) de la conduite tubulaire secondaire (3) environnante, les tuyaux (6) de la conduite tubulaire secondaire (3) étant réalisés sous forme de tuyaux en plastique d'un seul tenant et les raccords (7) de la conduite tubulaire secondaire (3) présentant un axe et étant réalisés sous forme de demi-coques (8), les demi-coques (8) des raccords (7) et les tuyaux adjacents (6) de la conduite tubulaire secondaire (3) étant reliés les uns aux autres à l'aide de manchons d'électrosoudage (9), ou les demi-coques (8) des raccords (7) de la conduite tubulaire secondaire (3) et les raccords (7), adjacents à celle-ci, constitués de demi-coques (8), étant reliés les uns aux autres à l'aide de manchons d'électrosoudage (9), **caractérisé en ce qu'**au moins une demi-coque (8) d'un raccord (7) présente un joint d'étanchéité (10) s'étendant le long d'un plan de séparation (11) s'étendant parallèlement à l'axe, le joint d'étanchéité (10) créant dans la région du manchon d'électrosoudage (9) une liaison de matière avec les demi-coques (8) du raccord (7) ou les demi-coques (7) et le manchon d'électrosoudage (9).

2. Système de tuyau double (1) selon la revendication 1, **caractérisé en ce que** les manchons d'électrosoudage (9) sont réalisés sous forme de manchons d'un seul tenant, de forme cylindrique creuse.

3. Système de tuyau double (1) selon la revendication 1, **caractérisé en ce que** les demi-coques (7) sont formées par un plan de séparation s'étendant centralement à travers le raccord (7) le long de l'axe.

4. Système de tuyau double (1) selon l'une des revendications 1 à 3, **caractérisé en ce que** les tuyaux (4) et les raccords (5) de la conduite tubulaire primaire (2) sont reliés les uns aux autres par électrosoudage.

5. Système de tuyau double (1) selon l'une des revendications 1 à 3, **caractérisé en ce que** les raccords (5) de la conduite tubulaire primaire sont réalisés sous forme de manchon d'électrosoudage (16).

6. Système de tuyau double (1) selon l'une des revendications 1 à 5, **caractérisé en ce que** les raccords (5, 7) sont réalisés sous forme de pièce en T, de pièce d'embranchement et/ou de coude.

7. Système de tuyau double (1) selon l'une des revendications 1 à 6, **caractérisé en ce que** les demi-coques (8) du raccord présentent respectivement côté raccordement une tubulure de raccordement (13), le diamètre extérieur de la tubulure de raccordement (13) correspondant de préférence au diamètre extérieur du tuyau (6).

8. Système de tuyau double (1) selon l'une des revendications 1 à 7, **caractérisé en ce que** des éléments d'espacement (17) sont agencés dans les raccords (7), les éléments d'espacement (17) assurant l'agencement concentrique de la conduite tubulaire primaire et de la conduite tubulaire secondaire l'une par rapport à l'autre.

9. Système de tuyau double (1) selon l'une des revendications 1 à 8, **caractérisé en ce qu'**au moins un clip (18) est agencé dans les raccords (7) afin de fixer provisoirement les demi-coques (8) à la conduite tubulaire primaire (2).

10. Procédé d'installation du système de tuyau double selon l'une des revendications 1 à 9, contenant les étapes suivantes :
soudage d'une section partielle de la conduite tubulaire primaire (2) sur au moins un raccord (5) et au moins un tuyau (4),
agencement provisoire d'un manchon d'électrosoudage (9) sur le diamètre extérieur d'un tuyau (6) de la conduite tubulaire secondaire (3), lequel tuyau doit être glissé sur la conduite tubulaire primaire (2),
glissement du tuyau (6) doté du manchon d'électrosoudage (9), agencé provisoirement sur celui-ci, d'une conduite tubulaire secondaire (3) sur la section de conduite tubulaire de la section partielle de la conduite tubulaire primaire (2) soudée sur le raccord (5),
installation d'un raccord (7) de la conduite tubulaire secondaire (3), de préférence autour d'un raccord (5) de la conduite tubulaire primaire (2) par la réunion de deux demi-coques (8),
**caractérisé en ce que** le raccord d'électrosoudage (9) agencé provisoirement sur le diamètre extérieur du tuyau (6) de la conduite tubulaire secondaire (3) est glissé et soudé sur la tubulure de raccordement du raccord (7), constitué des deux demi-coques (8).
